# EUROPEAN PATENT APPLICATION

(11) **EP 1 523 211 A2**
(43) Date of publication of application: **13.04.2005**
(21) Application number: 04396047.5
(22) Date of filing: 08.07.2004
(51) Int. Cl.: H04Q 7/38

(54) **Method, system and network nodes for transferring existing process information during a relocation procedure**

(30) Priority: 06.10.2003 FI 20031457
(71) Applicant: Nokia Corporation, 02150 Espoo (FI)
(72) Inventor: Quyot, Olivier, 00400 Helsinki (FI)
(74) Representative: Simmelvuo, Markku

(57) **Abstract**

The invention describes a method, system and network nodes for transferring already started process information to a target radio access network node during a relocation procedure. Currently ongoing RANAP processes (location reporting and trace) are currently lost in the UTRAN at a successful SRNS Relocation. If they shall continue also after the relocation has been performed, their initiating RANAP procedures shall thus be reinitiated from the core network towards the target RNC after the Relocation Resource Allocation procedure has been successfully executed.

In the invention the context of the two ongoing RANAP processes is transferred to the target RNC during SRNS relocation via existing RNSAP and RANAP messages. This will allow relocating of the processes on the target side without the extra Iu signaling to reinitiate them.

## Description

### BACKGROUND OF THE INVENTION

### FIELD OF THE INVENTION:

The invention relates to mobile telecommunication systems. In particular, the invention relates to a novel method, system and network nodes for transferring already started process information to a target radio access network node during a relocation procedure.

### DESCRIPTION OF THE RELATED ART:

There are a number of different standards known which govern the communication between mobile stations and the base stations as well as with other network elements. One example of a currently known standard is the Global System for Mobile communications (GSM) standard. Currently, work is being carried out on so-called third generation standards. These third generation standards are generated by a so called 3rd Generation Partnership Project (3GPP) and they are defining so called 3GPP system comprising UMTS Terrestrial Radio Access Network (UTRAN), GSM/EDGE Radio Access Network (GERAN), packet and circuit switched core network domains etc.

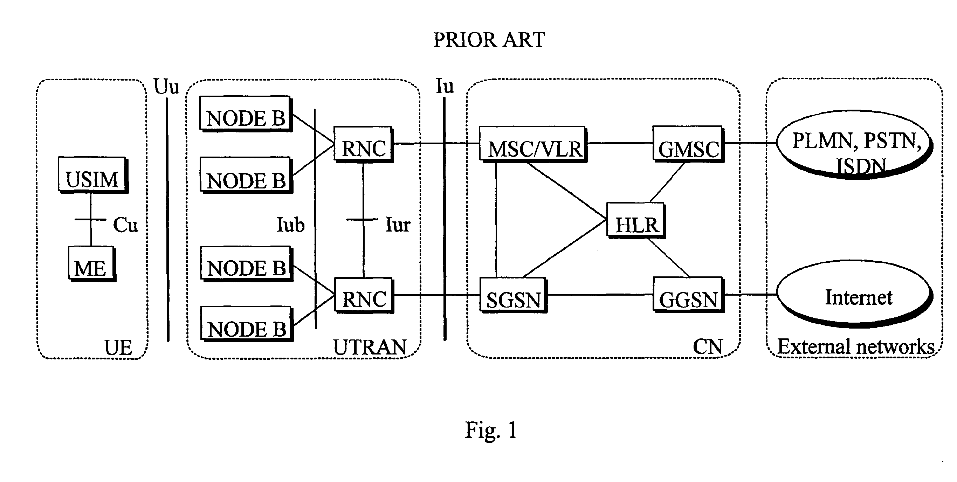

In the current specifications of the third generation mobile networks (referred to as UMTS), the system utilizes the same well-known architecture that has been used by all main second-generation systems. A block diagram of the system architecture of current UMTS network is presented in Figure 1. The UMTS network architecture includes the core network (CN), the UMTS terrestrial radio access network (UTRAN), and the user equipment (UE). The core network is further connected to external networks, i.e. the Internet, a PLMN, a PSTN and/or an ISDN.

The UTRAN architecture consists of several radio network subsystems (RNS). The RNS is further divided into the Radio Network Controller (RNC) and several base stations (BS, also referred to as node B in the 3^{rd} Generation Partnership Project (3GPP) specifications).

In this architecture there are several different connections between the network elements. The Iu interface connects the CN to the UTRAN. The Iur interface enables the exchange of signaling information, as well as the establishment of user plane connections, between two RNCs. The signaling protocol across the Iur interface is called the Radio Network Subsystem Application Part (RNSAP). The RNSAP is terminated at both ends of the Iur interface by an RNC. The Radio Access Network Application Part (RANAP) is a radio access network signaling protocol that consists of mechanisms, which handle procedures between the core network and radio access network. The Iur interface RNSAP signaling is described in more detail e.g. in the 3GPP TS 25.423 V5.6.0 (2003-06). The Iu interface RANAP signaling is described in more detail e.g. in the 3GPP TS 25.413 V5.5.0 (2003-06). In general, the Iu interface is specified in the 25.41x series of the 3GPP UMTS Technical Specifications. Correspondingly, the Iur interface is specified in the 25.42x series of the 3GPP UMTS Technical Specifications.

Furthermore, in Release 5 GERAN Iu mode case, a GERAN network may be connected to a UTRAN network via the Iur-g interface. A source RNC of a UTRAN and a target Base Station Controller (BSC) of a GERAN, a serving BSC of a GERAN and a target RNC of a UTRAN, and a serving BSC of a GERAN and a target BSC of a GERAN use Iur-g interface e.g. for signaling purposes. The GERAN is described e.g. in the 3GPP TS 43.051 V5.9.0 (2003-04) and the Iur-g interface e.g. in the 3GPP TS 25.423 V5.6.0 (2003-06).

A relocation of a Serving Radio Network Subsystem) SRNS is a UMTS functionality used to relocate the Serving RNS role from one RNS to another RNS. This UMTS functionality is realized by several elementary procedures executed in several interfaces and by several protocols and it may involve a change in the radio resources used between UTRAN and UE. This functionality allows moving the Serving RNS functionality from one RNC to another RNC, e.g. closer to where the UE has moved during the communication. The Serving RNS Relocation procedure may be applied when active cell management functionality has created a suitable situation for it.

The term serving RNS refers to a role an RNS can take with respect to a specific connection between an UE and UTRAN. There is one serving RNS for each UE that has a connection to UTRAN. The serving RNS is in charge of the radio connection between a UE and the UTRAN. The serving RNS terminates the Iu for this UE. Furthermore, Serving RNC (SRNC) is the RNC belonging to a SRNS.

It is also possible to relocate the serving RNS role from (a) one RNS within UMTS to another relocation target external to UMTS or (b) functionality equivalent to the serving RNS role from another relocation source external to UMTS to another RNS.

A core network (CN) can initiate in a radio access network (RAN) via Iu signaling the two following processes that will continue until the CN stops them:

Service Area Identifier (SAI) reporting upon change of the Service Area: CN requests RAN via RANAP Location Reporting Control (Event: change of SA, Reported Area: SAI) to report the Service Area ID upon each change of SA of the UE. RNC issues an RANAP Location Report whenever the SAI given in the previous report (could be RANAP Initial UE message) is not anymore valid (SA change) and upon receipt of first CN request message following a Relocation Resource Allocation procedure, as soon as SAI is available and the relocation has been successfully completed. CN can stop such reporting via another RANAP Location Reporting Control (Event: stop change of SA).

CN Invoke Trace: CN requests the initialization of Trace record in RNC via RANAP CN Invoke Trace (Trace type/reference, trigger ID, IMSI or IMEI, OMC id). CN can stop it via RANAP CN Deactivate Trace.

The purpose of the Location Reporting Control procedure is to allow the CN to request information on the location of a given UE. The procedure uses connection oriented signaling. Correspondingly, the purpose of the CN Invoke Trace procedure is to inform the RNC that it should begin producing a trace record of a type indicated by the CN and related to the UE. The procedure uses connection oriented signaling.

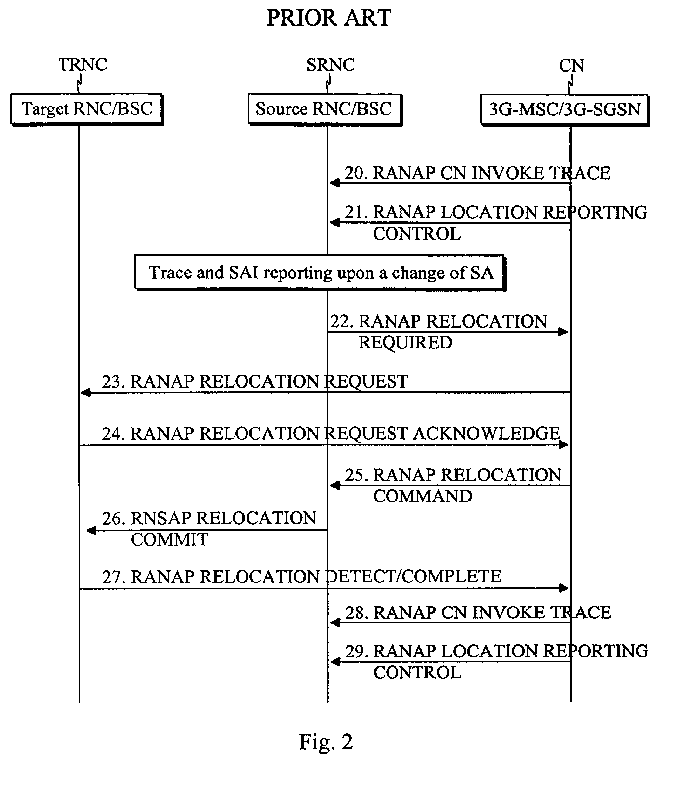

Figure 2 describes the current 3GPP release 5 solution for reinitializing of the ongoing RANAP processes after SRNS relocation. Currently in the 3GPP Release 5 and in earlier releases, when SRNS relocation is performed from a source RNC to a target RNC, all the RANAP originated ongoing processes and tasks in the source RNC, e.g. location reporting and trace, will be lost on the target side when the relocation is completed. In other words, messages 20 and 21 have to be sent again (messages 28 and 29) after the relocation is completed.

Therefore, according to the 3GPP UMTS Technical Specifications the order to perform location reporting at change of Service Area is lost in UTRAN at a successful Relocation of SRNS. If the location reporting at change of Service Area shall continue also after the relocation has been performed, the Location Reporting Control procedure shall thus be reinitiated from the CN towards the future SRNC after the Relocation Resource Allocation procedure has been executed successfully.

Correspondingly, the order to perform tracing is lost in UTRAN at successful Relocation of SRNS. If the tracing shall continue also after the relocation has been performed, the CN Invoke Trace procedure shall thus be reinitiated from the CN towards the future SRNC after the Relocation Resource Allocation procedure has been executed successfully.

### SUMMARY OF THE INVENTION:

The first aspect of the invention discloses a method for transferring a existing process information during a relocation procedure in a mobile telecommunication network comprising a core network node, a source radio access network node and a target radio access network node, wherein the method comprises the steps of starting a first process by sending an RANAP CN Invoke Trace message from said core network node to said source radio access network node; starting a second process by sending an RANAP Location Reporting Control message from said core network node to said source radio access network node; including a context of said first and second processes in at least one of a standard RANAP and RNSAP message in one of said core network node and said source radio access network node; sending said at least one of a standard RANAP and RNSAP message from one of said core network node and said source radio access network node to said target radio access network node; and handling said context in said target radio access network node as it would have been received in an RANAP CN Invoke Trace and an RANAP Location Reporting Control message.

The second aspect of the invention discloses a source radio access network node of a mobile communication network comprising receiving means for receiving an RANAP CN Invoke Trace and an RANAP Location Reporting Control message from a core network node, the messages starting a first and a second process; including means for including a context of said first and second processes in at least one of a standard RANAP and RNPAP message; and sending means for sending said at least one of a standard RANAP and RNSAP message to one of said core network node and a target radio access network node.

The third aspect of the invention discloses a target radio access network node of a mobile communication network comprising receiving means for receiving from one of a source radio access network node and a core network node a standard RANAP or RNSAP message comprising a context relating to an RANAP CN Invoke Trace message and an RANAP Location Reporting Control message; and handling means for handling said context as it would have received said context from said core network node included in an RANAP CN Invoke Trace and an RANAP Location Reporting Control message.

The fourth aspect of the invention discloses a core network node of a mobile communication network comprising means for setting a flag in an RANAP CN Invoke Trace message authorizing a source radio access network node to relocate a first process relating to said RANAP CN Invoke Trace message when relocation occurs; means for setting a flag in an RANAP Location Control Reporting message authorizing said source radio access network node to relocate a second process relating to said RANAP Location Control Reporting message when relocation occurs; and means for sending an RANAP CN Invoke Trace message and an RANAP Location Reporting Control message to said source radio access network node.

The fifth aspect of the invention discloses a core network node of a mobile communication network comprising means for sending an RANAP CN Invoke Trace message relating to a first process to a source radio access network node; means for sending an RANAP Location Reporting Control message relating to a second process to said source radio access network node; means for including a context of said first and second processes in an RANAP Relocation Request message; and means for sending said RANAP Relocation Request message comprising said context to a target radio access node.

The sixth aspect of the invention discloses a system for transferring existing process information during a relocation procedure in a mobile telecommunication network comprising a core network node, a source radio access network node and a target radio access network node, wherein the system further comprises receiving means for receiving an RANAP CN Invoke Trace and an RANAP Location Reporting Control message from a core network node, the messages starting a first and a second process; including means for including a context of said first and second processes in at least one of a standard RANAP and RNSAP message; sending means for sending said at least one of a standard RANAP and RNSAP message to one of said core network node and a target radio access network node; and handling means for handling said context as it would have received said context from said core network node included in an RANAP CN Invoke Trace and an RANAP Location Reporting Control message.

The invention has several advantages over the prior-art solutions. Considering the high frequency of relocations, the invention improves the continuity of those processes and saves Iu signaling by avoiding reinitialization of those processes after relocation.

With the use of the invention the core network has the confirmation that the target RNC has successfully started trace after relocation. This is accomplished by using the flag. At present, the core network cannot be sure e.g. with the existing Release 99/4/5 RANAP message that the RNC has really started trace.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
Fig 1 is a block diagram illustrating a current mobile telecommunication network architecture in accordance with the 3GPP Technical Specifications,
Fig 2 is a flow diagram illustrating the current 3GPP release 5 situation in SRNS relocation,
Fig 3 is a flow diagram illustrating a first embodiment of how to relocate the context of the ongoing RANAP processes during SRNS relocation in accordance with the invention,
Fig 4 is a flow diagram illustrating a second embodiment of how to relocate the context of the ongoing RANAP processes during SRNS relocation in accordance with the invention,
Fig 5 is a flow diagram illustrating a third embodiment of how to relocate the context of the ongoing RANAP processes during SRNS relocation in accordance with the invention,
Fig 6 illustrates an embodiment of a system in accordance with the invention,
Fig 7 illustrates another embodiment of a system in accordance with the invention, and
Fig 8 illustrates another embodiment of a system in accordance with the invention.

DETAILED DESCRIPTION OF THE preferred embodiments:

Reference will now be made in detail to the embodiments of the invention, examples of which are illustrated in the accompanying drawings.

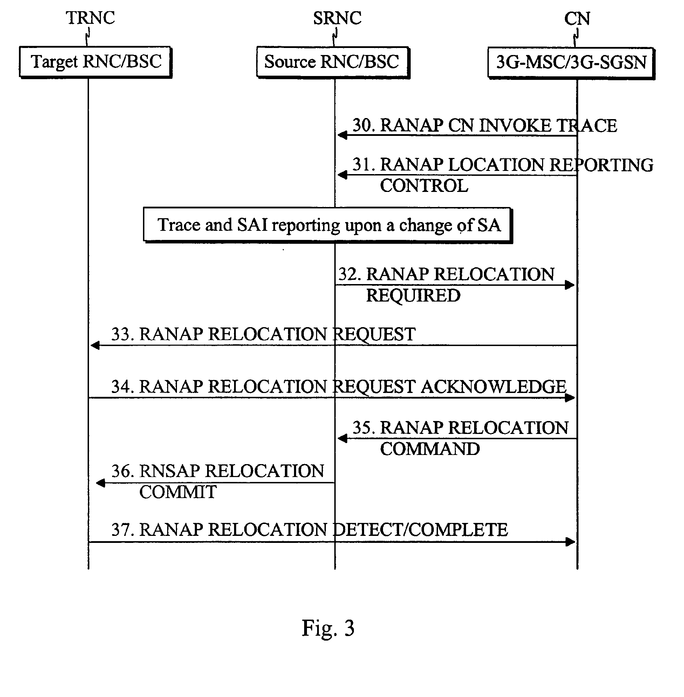

Figure 3 illustrates a first embodiment of the invention how to relocate the context of the ongoing RANAP processes during SRNS relocation using existing messages. In Figure 3 Iur is present between a source radio access network node SRNC and target radio access network node TRNC. The radio access nodes are e.g. radio network controllers of an UTRAN.

The core network node CN sends two RANAP messages (30 and 31) to the source radio network controller SRNC:

RANAP CN Invoke Trace: The core network node CN requests the initialization of Trace record in the SRNC.

RANAP Location Reporting Control: The core network node CN requests SRNC to report the Service Area ID (SAI) upon each change of SA of the UE. SRNC issues an RANAP Location Report whenever the SAI given in the previous report (could be e.g. RANAP Initial UE message) is not anymore valid (SA change) and upon receipt of first CN request message following a Relocation Resource Allocation procedure, as soon as SAI is available and the relocation has been successfully completed.

Messages 32-35 relate to normal relocation messaging between the SRNC, TRNC and CN.

In this embodiment, the SRNC includes the context of those RANAP ongoing processes in the RNSAP Relocation Commit message (36) via the included RANAP Relocation Information message sent to the TRNC. The TRNC will handle the context in the same way as it would have been received included in one RANAP Location Reporting Control message or one RANAP CN Invoke Trace message.

If the CN is involved in the relocation, it may need to allow such transfer and be aware of its outcome. Therefore, the CN can authorize the SRNC using a flag in the initial RANAP Location Reporting Control and RANAP CN Invoke Trace messages (30 and 31) to relocate those processes when relocation occurs. Furthermore, the CN may need to know that the processes have been successfully transferred via the Iur interface to the TRNC. For achieving this, the TRNC may inform the CN using a flag in the RANAP Relocation Detect/Complete messages (37) of the outcome of the.

If the flag is not present, the CN shall reinitiate the processes by the RANAP Location Reporting Control message and RANAP CN Invoke Trace message.

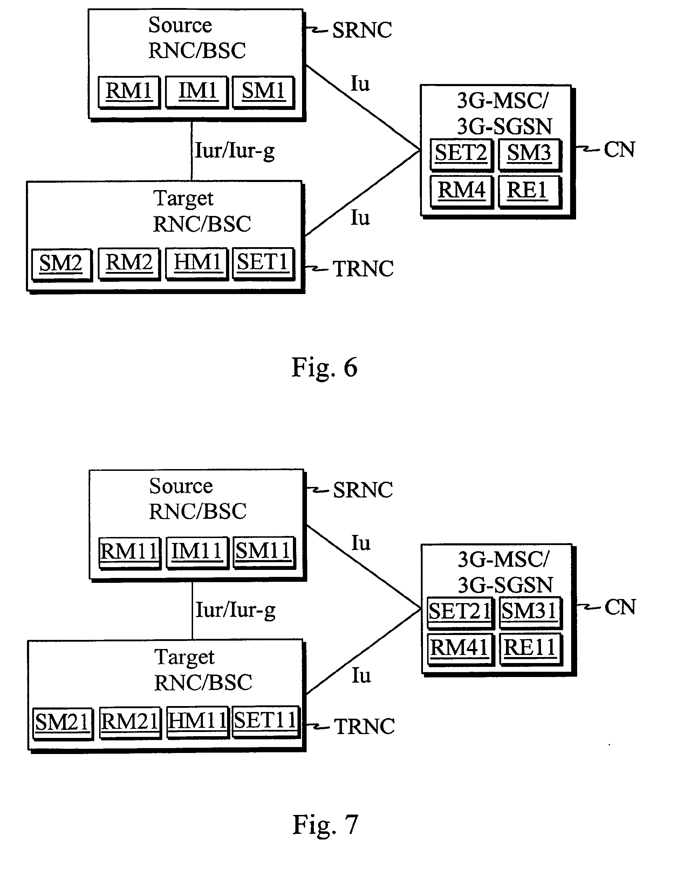

The signaling described in Figure 3 may be implemented e.g. in the system disclosed in Figure 6.

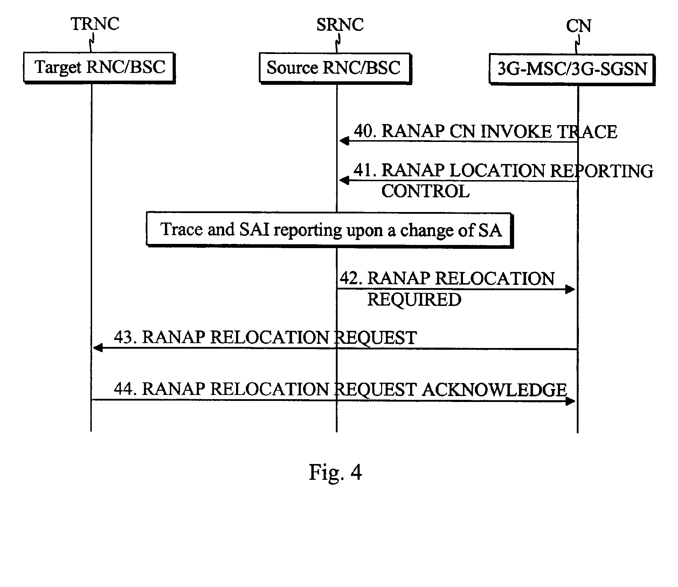

Figure 4 illustrates a second embodiment of the invention how to relocate the context of the ongoing RANAP processes during SRNS relocation using existing messages. The radio access nodes are e.g. radio network controllers of an UTRAN.

The core network node CN sends two RANAP messages (40 and 41) to the source radio network controller SRNC:

RANAP CN Invoke Trace: The core network node CN requests the initialization of Trace record in the SRNC.

RANAP Location Reporting Control: The core network node CN requests SRNC to report the Service Area ID (SAI) upon each change of SA of the UE. SRNC issues an RANAP Location Report whenever the SAI given in the previous report (could be e.g. RANAP Initial UE message) is not anymore valid (SA change) and upon receipt of first CN request message following a Relocation Resource Allocation procedure, as soon as SAI is available and the relocation has been successfully completed.

Message 42 relates to normal relocation messaging between the SRNC and CN.

In this embodiment, the CN includes the context of the ongoing RANAP processes in the RANAP Relocation Request message (43) sent to the TRNC. The TRNC will handle the context in the same way, as it would have been received included in one RANAP Location Reporting Control message or one RANAP CN Invoke Trace message.

Furthermore, the CN may need to know that the processes have been successfully transferred via the Iur interface to the TRNC. For achieving this, the TRNC may inform the CN using a flag in the RANAP Relocation Request Acknowledge message (44) of the outcome of the transfer.

If the flag is not present, the CN shall reinitiate the processes by RANAP Location Reporting Control message and RANAP CN Invoke Trace message.

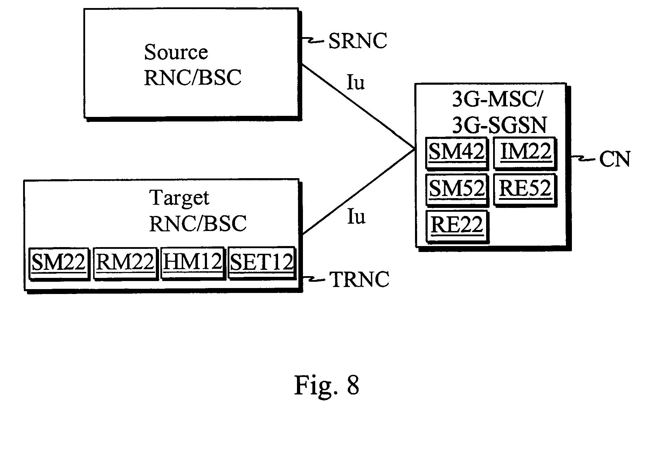

The signaling described in Figure 4 may be implemented e.g. in the system disclosed in Figure 8.

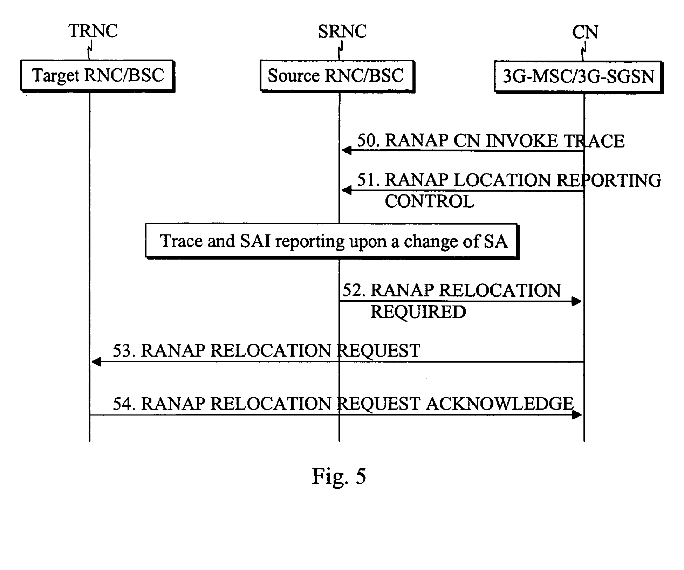

Figure 5 illustrates a third embodiment of the invention how to relocate the context of the ongoing RANAP processes during SRNS relocation using existing messages. The radio access nodes are e.g. radio network controllers of an UTRAN.

The core network node CN sends two RANAP messages (50 and 51) to the source radio network controller SRNC:

RANAP CN Invoke Trace: The core network node CN requests the initialization of Trace record in the SRNC.

RANAP Location Reporting Control: The core network node CN requests SRNC to report the Service Area ID (SAI) upon each change of SA of the UE. SRNC issues an RANAP Location Report whenever the SAI given in the previous report (could be e.g. RANAP Initial UE message) is not anymore valid (SA change) and upon receipt of first CN request message following a Relocation Resource Allocation procedure, as soon as SAI is available and the relocation has been successfully completed.

In this embodiment, the SRNC includes the context of the RANAP ongoing processes in the Source RNC to Target RNC transparent container included in the RANAP Relocation Required message (50). The CN will include the Source RNC to Target RNC transparent container included in the RANAP Relocation Required message into the RANAP Relocation Request message (51) sent to the TRNC.

The TRNC will handle the context in the same way, as it would have been received included in one RANAP Location Reporting Control message or one RANAP CN Invoke Trace message.

The CN may need to allow such transfer of processes and to know that the processes have been successfully transferred via the Iur interface to the TRNC. Therefore, the CN can authorize the SRNC using a flag in the initial RANAP Location Reporting Control and RANAP CN Invoke Trace messages (50 and 51) to relocate those processes when relocation occurs. Furthermore, the TRNC may inform the CN using a flag in the RANAP Relocation Acknowledge message (54) of the outcome of the transfer.

If the flag is not present, the CN shall reinitiate the processes by the RANAP Location Reporting Control message and RANAP CN Invoke Trace message.

The signaling described in Figure 5 may be implemented e.g. in the system disclosed in Figure 7.

The three different embodiments above (Figures 3-5) relate to the case of an intra SGSN/MSC SRNS relocation (SGSN, Serving GPRS Support Node; MSC, Mobile services Switching Center). Signaling flows in case of inter SGSN/MSC SRNS relocation can be found e.g. from the 3GPP TS 23.009 V5.5.0 (2003-06) and 3GPP TS 23.060 V5.6.0 (2003-06).

In the 3GPP release 5, the Gn interface between two SGSNs does not support the reinitialization of the aforementioned ongoing RANAP processes.

The solution disclosed in the first embodiment described with Figure 3 enables the relocation of the aforementioned ongoing RANAP processes even in case of inter SGSN relocation. However, if the new SGSN reinitiates those processes, it will still do it via the normal Iu signaling after the successful resource allocation procedure, as it will only receive the new flag afterwards. Therefore, there is no Iu signaling savings in this case.

The solution disclosed in the second embodiment with Figure 4 does not enable the relocation of the aforementioned ongoing RANAP processes even in case of inter SGSN relocation, unless GTP-C (GN signaling) changes are introduced.

The solution disclosed in the third embodiment with Figure 5 enables the relocation of the RANAP ongoing RANAP processes even in case of inter SGSN relocation. However, the new SGSN has not control over them except stopping those processes afterwards if they were not wanted on the target side.

In the 3GPP release 5, the MAP (Mobile Application Part) interface between two MSCs already supports the reinitialization of the aforementioned ongoing RANAP processes.

The solution disclosed in the first embodiment described with Figure 3 enables the relocation of the aforementioned ongoing RANAP processes transparently in case of inter MSC relocation. However, if the new MSC reinitiates those processes, it will still do it via the normal Iu signaling after the successful resource allocation procedure, as it will only receive the new flag afterwards. Therefore, there is neither Iu nor MAP signaling savings in this case.

The solution disclosed in the second embodiment with Figure 4 enables the relocation of the aforementioned ongoing RANAP processes in case of inter MSC relocation when RANAP is used over the E/MAP interface.

The solution disclosed in the third embodiment with Figure 5 enables the relocation of the aforementioned ongoing RANAP processes transparently in case of inter MSC relocation. However, there is not any MAP signaling when BSSAP (Base Station Subsystem Application Part) is used over the E/MAP interface.

Figure 6 describes one embodiment of a mobile telecommunication system in accordance with the invention. The system comprises a core network node CN, a source radio access network node SRNC and a target radio access network node TRNC. The interface between the radio access network nodes and the core network node is the Iu interface. The interface between the radio access network nodes SRNC and TRNC is the Iur interface.

In Figure 6, the source radio access network node SRNC comprises receiving means RM1 for receiving an RANAP CN Invoke Trace and an RANAP Location Reporting Control message from a core network node, including means IM1 for including a context of the first and second processes in an RANAP Relocation Information message included in a RNSAP Relocation Commit message and sending means SM1 for sending send the RNSAP Relocation Commit message to the target radio access network node TRNC.

The target radio access network node TRNC comprises receiving means RM2 for receiving from the source radio access network node SRNC an RNSAP Relocation Commit message comprising an RANAP Relocation Information message comprising the context relating to the RANAP CN Invoke Trace and RANAP Location Reporting Control messages and handling means HM1 for handling the context as it would have been received from the core network node CN included in an RANAP CN Invoke Trace and an RANAP Location Reporting Control message.

The target radio access network node TRNC further comprises setting means SET1 for setting a flag in at least one of an RANAP Relocation Detect and RANAP Relocation Complete message indicating whether the context was successfully transferred to the target radio access network node TRNC and sending means SM2 for sending the at least one of an RANAP Relocation Detect and RANAP Relocation Complete message to the core network node CN.

The core network node CN comprises setting means SET2 for setting a flag in an RANAP CN Invoke Trace message authorizing the source radio access network node SRNC to relocate a first process relating to the RANAP CN Invoke Trace message when relocation occurs, setting means SET2 for setting a flag in an RANAP Location Control Reporting message authorizing the source radio access network node SRNC to relocate a second process relating to the RANAP Location Control Reporting message when relocation occurs and sending means SM3 for sending the RANAP CN Invoke Trace message and RANAP Location Reporting Control message to the source radio access network node SRNC.

The core network node CN further comprises receiving means RM4 for receiving from the target radio access network node TRNC at least one of an RANAP Relocation Detect and RANAP Relocation Complete message comprising a flag indicating whether the first and second processes were successfully transferred to the target radio access network node TRNC and reinitiating means RE1 for reinitiating the first and second processes if the flag indicated an unsuccessful transfer of the first and second processes.

Figure 7 describes one embodiment of a mobile telecommunication system in accordance with the invention. The system comprises a core network node CN, a source radio access network node SRNC and a target radio access network node TRNC. The interface between the radio access network nodes and the core network node is the Iu interface. The interface between the radio access network nodes SRNC and TRNC is the Iur interface.

The source radio access network node SRNC comprises receiving means RM11 for receiving an RANAP CN Invoke Trace and an RANAP Location Reporting Control message from a core network node, including means IM11 for including a context of the first and second processes in at least one of a standard RANAP and RNSAP message and sending means SM1 for sending the at least one of a standard RANAP and RNSAP message to one of the core network node CN and the target radio access network node TRNC. Including means IM11 are arranged to include the context of the first and second processes node in the Source RNC to Target RNC transparent container included in an RANAP Relocation Required message and sending means SM11 are arranged to send the RANAP Relocation Required message to the core network node CN.

The target radio access network node TRNC comprises receiving means RM21 for receiving from the core network node CN an RANAP Relocation Request message comprising the context relating to the RANAP CN Invoke Trace and RANAP Location Reporting Control messages and handling means HM11 for handling the context as it would have received the context from the core network node CN included in an RANAP CN Invoke Trace and an RANAP Location Reporting Control message.

The target radio access network node TRNC further comprises setting means SET11 for setting a flag in an RANAP Relocation Request Acknowledge message indicating whether the context was successfully transferred to the target radio access network node TRNC and sending means SM12 for sending the RANAP Relocation Request Acknowledge message to the core network node CN.

The core network node CN comprises setting means SET21 for setting a flag in an RANAP CN Invoke Trace message authorizing the source radio access network node SRNC to relocate a first process relating to the RANAP CN Invoke Trace message when relocation occurs, setting means SET21 for setting a flag in an RANAP Location Control Reporting message authorizing the source radio access network node SRNC to relocate a second process relating to the RANAP Location Control Reporting message when relocation occurs and sending means SM31 for sending the RANAP CN Invoke Trace message and RANAP Location Reporting Control message to the source radio access network node SRNC.

The core network node CN further comprises receiving means RM31 for receiving from the source radio access network node an RANAP Relocation Required message comprising the Source RNC to Target RNC transparent container including a context relating to the first and second processes and sending means SM31 arranged to send an RANAP Relocation Request message comprising the context to the target radio access network node TRNC.

The core network node CN further comprises receiving means RM41 for receiving from the target radio access network node TRNC an RANAP Relocation Request Acknowledge message comprising a flag indicating whether the first and second processes were successfully transferred to the target radio access network node TRNC and reinitiating means RE11 for reinitiating the first and second processes if the flag indicated an unsuccessful transfer of the first and second processes.

Figure 8 describes another embodiment of a mobile telecommunication system in accordance with the invention. The system comprises a core network node CN, a source radio access network node SRNC and a target radio access network node TRNC. The interface between the radio access network nodes and the core network node is the Iu interface.

The target radio access network node TRNC comprises receiving means RM22 for receiving from the core network node CN an RANAP Relocation Request message comprising a context relating to an RANAP CN Invoke Trace message and an RANAP Location Reporting Control message and handling means HM12 for handling the context as it would have received the context from the core network node CN included in an RANAP CN Invoke Trace and an RANAP Location Reporting Control message.

The target radio access network node TRNC further comprises setting means SET12 for setting a flag in an RANAP Relocation Request Acknowledge message indicating whether the context was successfully transferred to the target radio access network node TRNC and sending means SM22 for sending the RANAP Relocation Request Acknowledge message to the core network node CN.

The core network node CN comprises sending means SM42 for sending an RANAP CN Invoke Trace message relating to a first process to the source radio access network node SRNC, sending means SM42 for sending an RANAP Location Reporting Control message relating to a second process to the source radio access network node SRNC, including means IM22 for including a context of the first and second processes in an RANAP Relocation Request message and sending means SM52 for sending the RANAP Relocation Request message comprising the context to the target radio access node TRNC.

The core network node CN further comprises receiving means RM52 for receiving from the target radio access network node TRNC an RANAP Relocation Request Acknowledge message comprising a flag indicating whether the first and second processes were successfully transferred from the source radio access network node SRNC to the target radio access network node TRNC and reinitiating means RE22 for reinitiating the first and second processes if the flag indicated an unsuccessful transfer of the first and second processes.

The aforementioned means may be implemented with at least one of software and hardware components in a manner known to a man skilled in the art, and therefore they are not described in more detail.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for transferring existing process information during a relocation procedure in a mobile telecommunication network comprising a core network node, a source radio access network node and a target radio access network node, the method comprising:
starting a first process by sending a Radio Access Network Application Part Core Network Invoke Trace message from a core network node to a source radio access network node;
starting a second process by sending a Radio Access Network Application Part Location Reporting Control message from said core network node to said source radio access network node;
including a context of said first process and second process in at least one of a standard Radio Access Network Application Part and Radio Network Subsystem Application Part message in one of said core network node and said source radio access network node;
sending said at least one of said standard Radio Access Network Application Part and Radio Network Subsystem Application Part message from one of said core network node and said source radio access network node to a target radio access network node; and
handling said context in said target radio access network node as being received in said Radio Access Network Application Part Core Network Invoke Trace message and a Radio Access Network Application Part Location Reporting Control message.

2. The method according to claim 1, wherein said step of including said context of said first process and second process in at least one of said standard Radio Access Network Application Part and Radio Network Subsystem Application Part message comprises the step of:
including said context of said first process and second process in said source radio access network node.

3. The method according to claim 2, wherein said step of including said context of said first process and second process in said source radio access network node comprises the step of:
including said context of said first process and second process in said source radio access network node in a Radio Access Network Application Part Relocation Information message.

4. The method according to claim 3, wherein said step of sending said at least one of said standard Radio Access Network Application Part and Radio Network Subsystem Application Part message from one of said core network node and said source radio access network node to said target radio access network node comprises the step of:
sending said Radio Access Network Application Part Relocation Information message from said source radio access network node to said target radio access network node in a Radio Network Subsystem Application Part Relocation Commit message.

5. The method according to claim 2, wherein said step of including said context of said first process and second process in said source radio access network node comprises the step of:
including said context of said first process and second process in said source radio access network node in the Source Radio Network Controller to a Target Radio Network Controller transparent container included in a Radio Access Network Application Part Relocation Required message.

6. The method according to claim 5, wherein said step of sending said at least one of said standard Radio Access Network Application Part and Radio Network Subsystem Application Part message from one of said core network node and said source radio access network node to said target radio access network node comprises:
sending the Radio Access Network Application Part Relocation Required message from said source radio access network node to said core network node; and
sending a Radio Access Network Application Part Relocation Request message comprising said context from said core network node to said target radio access network node.

7. The method according to claim 1, wherein said step of including said context of said first process and second process in said core network node comprises the step of:
including said context of said first process and second process in said core network node in a Radio Access Network Application Part Relocation Request message.

8. The method according to claim 7, wherein said step of sending said at least one of said standard Radio Access Network Application Part and Radio Network Subsystem Application Part message from one of said core network node and said source radio access network node to said target radio access network node comprises the step of:
sending said Radio Access Network Application Part Relocation Request message from said core network node to said target radio access network node.

9. The method according to claim 1, wherein said steps of starting said first process by sending said Radio Access Network Application Part Core Network Invoke Trace message from said core network node to said source radio access network node and starting said second process by sending said Radio Access Network Application Part Location Reporting Control message from said core network node to said source radio access network node comprises:
setting in said core network node a flag in said Radio Access Network Application Part Core Network Invoke Trace message authorizing said source radio access network node to relocate said first process when relocation occurs; and
setting in said core network node a flag in said Radio Access Network Application Part Location Control Reporting message authorizing said source radio access network node to relocate said second process when relocation occurs.

10. The method according to claim 9, wherein the method further comprises the step of:
setting in said target radio access network node a flag in at least one of a Radio Access Network Application Part Relocation Detect message and a Radio Access Network Application Part Relocation Complete message indicating whether said context was successfully transferred to said target radio access network node.

11. The method according to claim 10, wherein the method further comprises the step of:
reinitiating said first process and second process with said core network node if said flag indicates an unsuccessful transfer of said context.

12. The method according to claim 1, wherein the method further comprises:
setting in said target radio access network node a flag in a Radio Access Network Application Part Relocation Request Acknowledge message indicating whether said context was successfully transferred to said target radio access network node; and
reinitiating said first process and second process with said core network node if said flag indicates an unsuccessful transfer of said context.

13. The method according to claim 1, wherein said steps of starting a first process by sending said Radio Access Network Application Part Core Network Invoke Trace message from said core network node to said source radio access network node and starting a second process by sending said Radio Access Network Application Part Location Reporting Control message from said core network node to said source radio access network node comprise:
setting in said core network node a flag in said Radio Access Network Application Part Core Network Invoke Trace message authorizing said source radio access network node to relocate said first process when relocation occurs; and
setting in said core network node a flag in said Radio Access Network Application Part Location Control Reporting message authorizing said source radio access network node to relocate said second process when relocation occurs.

14. The method according to claim 13, wherein the method further comprises the step of:
setting in said target radio access network node a flag in a Radio Access Network Application Part Relocation Request Acknowledge message indicating whether said context was successfully transferred to said target radio access network node.

15. The method according to claim 14, wherein the method further comprises the step of:
reinitiating said first process and second process with said core network node if said flag indicates an unsuccessful transfer of said context.

16. A source radio access network node of a mobile communication network, the source Radio Access Network Node comprising:
receiving means for receiving a Radio Access Network Application Part Core Network Invoke Trace and a Radio Access Network Application Part Location Reporting Control message from a core network node, the Radio Access Network Application Part Core Network Invoke Trace and the Radio Access Network Application Part Location Reporting Control messages starting a first process and a second process;
including means for including a context of said first process and second process in at least one of a standard Radio Access Network Application Part and Radio Network Subsystem Application Part message; and
sending means for sending said at least one of said standard Radio Access Network Application Part and Radio Network Subsystem Application Part message to one of said core network node and a target radio access network node.

17. The source radio access network node according to claim 16, wherein:
said including means are configured to include said context of said first process and second process in a Radio Access Network Application Part Relocation Information message included in a Radio Network Subsystem Application Part Relocation Commit message; and
said sending means are configured to send said Radio Network Subsystem Application Part Relocation Commit message to said target radio access network node.

18. The source radio access network node according to claim 16, wherein:
said including means are configured to include said context of said first process and second process in a Source Radio Network Controller to a Target Radio Network Controller transparent container included in a Radio Access Network Application Part Relocation Required message; and
said sending means are configured to send said Radio Access Network Application Part Relocation Required message to said core network node.

19. A target radio access network node of a mobile communication network comprising:
receiving means for receiving from one of a source radio access network node and a core network node a standard Radio Access Network Application Part message or Radio Network Subsystem Application Part message comprising a context relating to a Radio Access Network Application Part Core Network Invoke Trace message and a Radio Access Network Application Part Location Reporting Control message; and
handling means for handling said context as being received from said core network node included in said Radio Access Network Application Part Core Network Invoke Trace message and said Radio Access Network Application Part Location Reporting Control message.

20. The target radio access network node according to claim 19, wherein:
said receiving means are configured to receive from said source radio access network node a Radio Network Subsystem Application Part Relocation Commit message comprising a Radio Access Network Application Part Relocation Information message comprising said context relating to said Radio Access Network Application Part Core Network Invoke Trace message and Radio Access Network Application Part Location Reporting Control message; and
said handling means are configured to handle said context as being received from said core network node included in said Radio Access Network Application Part Core Network Invoke Trace message and said Radio Access Network Application Part Location Reporting Control message.

21. The target radio access network node according to claim 19, wherein:
said receiving means are configured to receive from said core network node a Radio Access Network Application Part Relocation Request message comprising said context relating to said Radio Access Network Application Part Core Network Invoke Trace message and said Radio Access Network Application Part Location Reporting Control message; and
said handling means are configured to handle said context as being received from said core network node included in said Radio Access Network Application Part Core Network Invoke Trace message and said Radio Access Network Application Part Location Reporting Control message.

22. The target radio access network node according to claim 19, further comprising:
setting means for setting a flag in at least one of a Radio Access Network Application Part Relocation Detect message, a Radio Access Network Application Part Relocation Complete message and a Radio Access Network Application Part Relocation Request Acknowledge message indicating whether said context was successfully transferred to said target radio access network node; and
sending means for sending said at least one of said Radio Access Network Application Part Relocation Detect message, said Radio Access Network Application Part Relocation Complete message and said Radio Access Network Application Part Relocation Request Acknowledge message to said core network node.

23. A core network node of a mobile communication network comprising:
setting means for setting a flag in a Radio Access Network Application Part Core Network Invoke Trace message authorizing a source radio access network node to relocate a first process relating to said Radio Access Network Application Part Core Network Invoke Trace message when relocation occurs;
setting means for setting a flag in a Radio Access Network Application Part Location Control Reporting message authorizing said source radio access network node to relocate a second process relating to said Radio Access Network Application Part Location Control Reporting message when relocation occurs; and
sending means for sending said Radio Access Network Application Part Core Network Invoke Trace message and said Radio Access Network Application Part Location Reporting Control message to said source radio access network node.

24. The core network node according to claim 23, further comprising:
receiving means for receiving from said source radio access network node a Radio Access Network Application Part Relocation Required message comprising a Source Radio Network Controller to a Target Radio Network Controller transparent container including a context relating to said first process and said second process; and
sending means for sending a Radio Access Network Application Part Relocation Request message comprising said context to a target radio access network node.

25. The core network node according to claim 23, further comprising:
receiving means for receiving from a target radio access network node one of a Radio Access Network Application Part Relocation Detect message, a Radio Access Network Application Part Relocation Complete message and a Radio Access Network Application Part Relocation Request Acknowledge message comprising a flag indicating whether said first process and said second process were successfully transferred to said target radio access network node; and
reinitiating means for reinitiating said first process and said second process if said flag indicates an unsuccessful transfer of said first process and said second process.

26. A core network node of a mobile communication network comprising:
sending means for sending a Radio Access Network Application Part Core Network Invoke Trace message relating to a first process to a source radio access network node;
sending means for sending a Radio Access Network Application Part Location Reporting Control message relating to a second process to said source radio access network node;
including means for including a context of said first process and said second process in a Radio Access Network Application Part Relocation Request message; and
sending means for sending said Radio Access Network Application Part Relocation Request message comprising said context to a target radio access node.

27. The core network node according to claim 26, further comprising:
receiving means for receiving from the target radio access network node a Radio Access Network Application Part Relocation Request Acknowledge message comprising a flag indicating whether said first process and said second process were successfully transferred from said source radio access network node to said target radio access network node; and
reinitiating means for reinitiating said first process and said second process if said flag indicates an unsuccessful transfer of said first process and said second process.

28. A system for transferring existing process information during a relocation procedure in a mobile telecommunication network comprising a core network node, a source radio access network node and a target radio access network node, the system comprising:
receiving means for receiving a Radio Access Network Application Part Core Network Invoke Trace message and a Radio Access Network Application Part Location Reporting Control message from a core network node, the Radio Access Network Application Part Core Network Invoke message and the Radio Access Network Application part Location Reporting Control message starting a first process and a second process;
including means for including a context of said first process and said second process in at least one of a standard Radio Access Network Application Part message and Radio Network Subsystem Application Part message;
sending means for sending said at least one of said standard Radio Access Network Application Part message and Radio Network Subsystem Application Part message to one of said core network node and a target radio access network node; and
handling means for handling said context as being received from said core network node included in said Radio Access Network Application Part Core Network Invoke Trace message and said Radio Access Network Application Part Location Reporting Control message.

29. The system according to claim 28, wherein said including means are configured to include said context of said first process and said second process in said source radio access network node.

30. The system according to claim 29, wherein said including means are configured to include said context of said first process and said second process in said source radio access network node in a Radio Access Network Application Part Relocation Information message.

31. The system according to claim 30, wherein said sending means are configured to send said Radio Access Network Application Part Relocation Information message from said source radio access network node to said target radio access network node in a Radio Network Subsystem Application Part Relocation Commit message.

32. The system according to claim 29, wherein said including means are configured to include said context of said first process and said second process in said source radio access network node in a Source Radio Network Controller to Target Radio Network Controller transparent container included in a Radio Access Network Application Part Relocation Required message.

33. The system according to claim 32, wherein said sending means are configured to send said Radio Access Network Application Part Relocation Required message from said source radio access network node to said core network node and a Radio Access Network Application Part Relocation Request message comprising said context from said core network node to said target radio access network node.

34. The system according to claim 28, wherein said including means are configured to include a context of said first process and said second process in said core network node.

35. The system according to claim 34, wherein said including means are configured to include said context of said first process and said second process in said core network node in a Radio Access Network Application Part Relocation Request message.

36. The system according to claim 35, wherein said sending means are configured to send said Radio Access Network Application Part Relocation Request message from said core network node to said target radio access network node.

37. The system according to claim 28, further comprising:
setting means in said core network node for setting a flag in said Radio Access Network Application Part Core Network Invoke Trace message authorizing said source radio access network node to relocate said first process when relocation occurs and for setting a flag in said Radio Access Network Application Part Location Control Reporting message authorizing said source radio access network node to relocate said second process when relocation occurs.

38. The system according to claim 37, further comprising:
setting means in said target radio access network node for setting a flag in at least one of a Radio Access Network Application Part Relocation Detect message and Radio Access Network Application Part Relocation Complete message indicating whether said context was successfully transferred to said target radio access network node.

39. The system according to claim 38, further comprising:
reinitiating means for reinitiating said first process and said second process with said core network node if said flag indicates an unsuccessful transfer of said context.

40. The system according to claim 28, further comprising:
setting means in said target radio access network node for setting a flag in a Radio Access Network Application Part Relocation Request Acknowledge message indicating whether said context was successfully transferred to said target radio access network node; and
reinitiating means for reinitiating said first process and said second process with said core network node if said flag indicates an unsuccessful transfer of said context.

41. The system according to claim 28, further comprising:
setting means in said core network node for setting a flag in said Radio Access Network Application Part Core Network Invoke Trace message authorizing said source radio access network node to relocate said first process when relocation occurs and for setting a flag in said Radio Access Network Application Part Location Control Reporting message authorizing said source radio access network node to relocate said second process when relocation occurs.

42. The system according to claim 41, further comprising:
setting means in said target radio access network node for setting a flag in a Radio Access Network Application Part Relocation Request Acknowledge message indicating whether said context was successfully transferred to said target radio access network node.

43. The system according to claim 42, further comprising:
reinitiating means for reinitiating said first process and said second process with said core network node if said flag indicates an unsuccessful transfer of said context.
